# EUROPÄISCHE PATENTANMELDUNG

(11) **EP 0 985 371 A1**
(43) Veröffentlichungstag der Anmeldung: **15.03.2000**
(21) Anmeldenummer: 99118165.2
(22) Anmeldetag: 13.09.1999
(51) Int. Cl.: A47J 19/02

(54) **Pressvorrichtung**

(30) Priorität: 12.09.1998 DE 29816313 U
(71) Anmelder: Gkountoglou, Panagiotis, 86633 Neuburg/Donau (DE)
(72) Erfinder: Gkountoglou, Panagiotis, 86633 Neuburg/Donau (DE)
(74) Vertreter: Fiener, Josef

(57) **Zusammenfassung**

Um bei einer Pressvorrichtung zum Auspressen von in Scheiben geschnittenen Früchten den Benutzer vor herausspritzendem Fruchtsaft zu schützen, wird vorgeschlagen, daß das Oberteil (2) am Rand seiner Druckfläche (7) eine erhabene Überdeckung (8) aufweist, die über den Rand (5) des Unterteils (1) übersteht, und zwischen dem Rand (5) des Unterteils (1) und der Druckfläche (7) des Oberteils (2) ein Freiraum (3) für die Fruchtschale ausgebildet ist.

## Beschreibung

Die Erfindung betrifft eine Pressvorrichtung nach dem Oberbegriff des Anspruches 1.

Derartige Pressvorrichtungen, z. B. gemäß der DT 22 24 528 B2, weisen in der üblichen Bauart ein schalenförmiges Unterteil, ein Oberteil und eine Achse auf. Aufwendigere Pressvorrichtungen können auch aus mehreren Bauteilen bestehen. Das Unterteil weist dabei an der Stirnseite eine Ausgießnase auf, die sich mittig auf der Symmetrieebene der Pressvorrichtung befindet. Das Oberteil ist durch die Achse in dem Unterteil schwenkbar aufgenommen.

Solche Pressvorrichtungen werden hauptsächlich zum Auspressen von in Scheiben geschnittenen Früchten, wie beispielsweise Zitronen- oder Orangenscheiben, verwendet. Sie werden häufig in der Gastronomie und in Barbetrieben eingesetzt. Hier finden sie insbesondere bei Speisen, wie Fisch, oder bei Getränken, wie Tee, Anwendung.

Nachteile der bekannten Pressvorrichtungen sind hierbei, daß beim Auspressen die Fruchtscheiben oft aus der Pressvorrichtung rutschen. Auch kommt es zum seitlichen Herausspritzen von Fruchtsaft. Dies kann für den Anwender sehr unangenehm sein, da der Fruchtsaft sogar in die Augen spritzen kann oder die Kleidung beschmutzt wird. Ein weiterer Nachteil ist, daß durch die vorstehende Ausgießnase eine Ablage, zum Beispiel auf der Untertasse eines Teeglases, nicht möglich ist, da bei üblichen Untertassen der Schwerpunkt der gefüllten Pressvorrichtung außerhalb des Tellerrandes liegt, und die Pressvorrichtung vom Unterteller fällt. Dies erfordert somit ein zusätzliches Geschirrstück in Form eines weiteren Untertellers oder einer zusätzlichen Schale, so daß ein erhöhter Geschirraufwand erforderlich ist.

Die Aufgabe der vorliegende Erfindung ist daher, eine Pressvorrichtung zu schaffen, die den Benutzer oder Anwender vor herausspritzendem Fruchtsaft schützt, sowie neben dem Glas oder der Tasse auf der Untertasse sicher abgelegt werden kann und somit zusätzliches Geschirr für die Pressvorrichtung und Tabletts vermieden wird.

Diese Aufgabe wird durch eine Pressvorrichtung mit den in Anspruch 1 aufgeführten Merkmalen gelöst.

Insbesondere wird durch die überstehende Überdeckung am Rand des Oberteiles in Art einer Abschirmung über den Rand des Unterteils ein Herausspritzen des Fruchtsaftes oder des Fruchtfleisches verhindert. Durch diese Überdeckung des Unterteiles wird die Pressvorrichtung nach oben abgeschlossen. Es wird daher das bekannte Problem beseitigt, daß beispielsweise beim Auspressen von Zitronenscheiben der Fruchtsaft dem Benutzer in die Augen oder auf die Kleidung spritzt. Durch den allseitig überstehenden Rand des Pressendeckels wird auch ein Freiraum für die Fruchtschale gebildet, so daß der Kraftaufwand beim Auspressen erheblich verringert und damit auch die Verletzungsgefahr z. B. durch Quetschungen erheblich reduziert wird.

Weitere vorteilhafte Ausgestaltungen der Erfindung sind in den abhängigen Ansprüchen angegeben. So ist zum Auspressen von Früchten, beispielsweise bei Tee mit Zitrone, die Pressvorrichtung bevorzugt mit einem geteilten Oberteil ausgestattet und an jeder Hälfte des geteilten Oberteiles eine Schneidkante angeformt. Dadurch kann das zu pressende Gut gleich während des Pressvorganges halbiert und in zwei Schritten ausgepresst werden. Die Schale der Fruchtscheibe wird bei diesem Vorgang nicht geschnitten, da zwischen den Druckflächen der Oberteile und dem Rand des Unterteiles der Freiraum und damit genügend Raum für die Fruchtschale vorgesehen ist. Dadurch bleibt die Schnittkraft gering, da nur das Fruchtfleisch geschnitten und ausgepreßt wird. Ein weiterer Vorteil des geteilten Oberteiles ist, daß durch die halbierte Pressfläche auch nur die halbe Presskraft notwendig ist. Dadurch kann die Frucht bei gleicher Presskraft effizienter ausgepreßt werden, beziehungsweise das Auspressen wird wesentlich erleichtert.

In bevorzugter Weise ist zudem im Unterteil eine Längsrille vorgesehen, in welche die Schneiden der geteilten Oberteile eintauchen können. Vorteilhafterweise ist weiterhin vorgesehen, daß die ausgießseitige Stirnseite mit einer Rundung konkav ausgebildet ist, wobei die konkave Form etwa eine Viertelkreisform sein kann mit einem Kreisdurchmesser von vorzugsweise 60 bis 120 mm. Mit diesem besonderen Merkmal wird erreicht, daß die Pressvorrichtung beim Servieren auf die Untertasse direkt neben die Tasse oder das Glas gelegt werden kann. Durch die konkave Form der Stirnseite ergibt sich eine Aussparung, die in etwa dem Durchmesser der Tasse oder des Glases entspricht. Der Schwerpunkt der Pressvorrichtung verlagert sich hierdurch in Richtung des Gefäßmittelpunktes. Dadurch erübrigt sich eine Extraschale für die Pressvorrichtung und eventuell kann auch ein Tablett eingespart werden. Dies kann besonders bei Schnellgaststätten zu einer erhebliche Reduzierung des Geschirrverbrauches und der Tabletts führen.

Eine weitere vorteilhafte Ausgestaltung der Pressvorrichtung ist die rohrförmige Lagerung zur Aufnahme der Achse, die sich auf der Oberseite der Pressvorrichtung schließt. Dies hat den Vorteil, daß bei der Belastung der Pressvorrichtung, d. h. wenn beispielsweise eine Fruchtscheibe ausgepreßt werden soll, die Presskraft von den Druckflächen direkt auf die Achse übertragen und die rohrförmige Lagerung selbst nicht oder nur gering belastet wird.

Ein Ausführungsbeispiel der Erfindung wird anhand der Figuren näher erläutert. Hierbei zeigen:
- Fig. 1: eine Pressvorrichtung mit durchgehendem Deckel bzw. Oberteil mit seitlich herausgezogener, vergrößerter Querschnittsdarstellung des Randbereiches entlang der Schnittlinie A-A; und
- Fig. 2: eine Pressvorrichtung mit geteiltem Oberteil in geöffnetem Zustand, wobei die rechte Deckel- Hälfte ca. 60 Grad und die linke Hälfte etwa 30 Grad geöffnet ist.

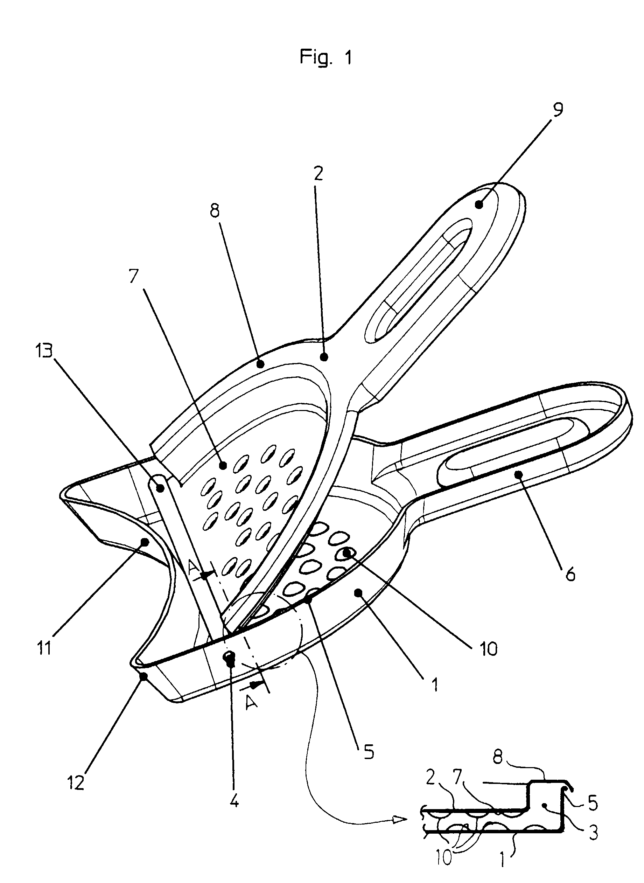

In Fig. 1 ist eine Pressvorrichtung mit einem schalenförmigen Unterteil 1, einem Oberteil 2 und einer Achse 4 dargestellt. Das Unterteil 1 ist wannenförmig mit einem erhöhten Rand 5 ausgebildet. An dem Unterteil 1 ist weiterhin ein Griff 6 angeformt. Das Pressen-Oberteil 2 ist über die Achse 4 mit dem Unterteil 2 verbunden. Dessen Druckfläche 7 ist im Querschnitt kleiner als die entsprechende Gegenfläche des Unterteiles 1. Der Unterschied der Druckflächen ist dabei so bemessen, daß dieser unter Bildung eines Freiraumes 3 (vgl. Schnittdarstellung) genügend Raum gibt für die nicht auspressbaren Ränder der Früchte, zum Beispiel der Zitronenschalen.

Die Druckfläche 7 des Oberteils 2 ist umrandet mit einer erhabenen Überdeckung 8, welche die Oberkante des Randes 5 des Unterteils 1 übergreift und somit ein Herausspritzen von Fruchtsaft und Fruchtfleisch verhindert. Auch das Oberteil 2 ist mit einem angeformten Griff 9 versehen. Sowohl der Boden des Unterteils 1 als auch der Boden (Druckfläche 7) des Oberteiles 2 sind mit in den Pressraum gerichteten erhabenen Noppen 10 versehen, um die Auspresswirkung zu unterstützen.

Stirnseitig ist die Pressvorrichtung mit einer konkaven Rundung 11 versehen. Dies läßt eine besonders nahe Position der Pressvorrichtung auf einem Unterteller an die Tasse oder das Glas zu. Diese Rundung 11 läuft an den beiden Enden in je einer Ausgießnase des Ausgießbereichs 12 aus. Die Lagerung des Oberteiles 2 auf der Achse 4 ist so ausgebildet, daß die Druckfläche 7 unterhalb der Achse 4 hindurchgeführt und auf der Oberseite zu einer rohrförmigen Lagerung 13 geschlossen ist.

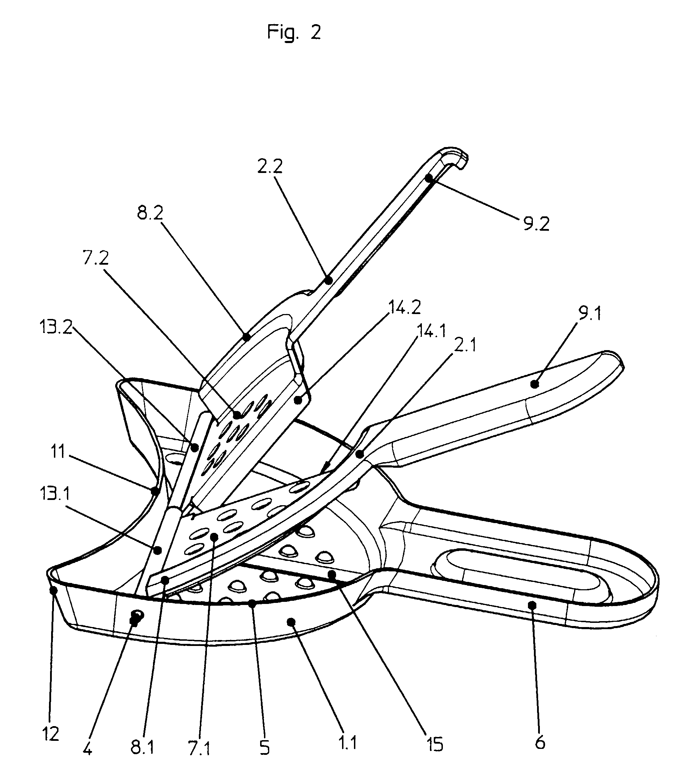

In Fig. 2 ist eine Pressvorrichtung mit geteiltem Oberteil gezeigt. Dabei werden gleiche Teile mit gleichen Bezugsziffern wie in Fig. 1 bezeichnet. Im Unterschied zur Ausführung nach Fig. 1 ist das Oberteil 2 jedoch symmetrisch und senkrecht zur Achse 4 in zwei Teile geteilt, nämlich die Hälften 2.1 und 2.2. Die in Scheiben geschnittene Früchtescheiben werden ihrer Form entsprechend in die geöffnete Pressvorrichtung eingelegt. Dazu müssen beide Deckel- oder Oberteil-Hälften 2.1 und 2.2 geöffnet werden. Die eingelegte Fruchtscheibe wird gepresst und dabei in zwei Teile geschnitten, indem beispielsweise die rechte Deckel-Hälfte 2.2 mit dem Griff 9.2 und dem Griff 6 des Unterteils 1 zusammengedrückt wird. Dabei trennt eine Schneide 14.2 das Fruchtfleisch der Frucht, ohne die Schale zu zerschneiden. Um das Fruchtfleisch vollständig durchzuschneiden, greift die Schneide 14.2 in eine Rille 15 in dem Unterteil 1 ein. Durch den Druck des Unterteils 1 und der rechten Oberteil-Hälfte 2.2 mit dem Griff 9.2 wird somit das Fruchtfleisch gepreßt und der Fruchtsaft herausgedrückt. Entsprechendes gilt für die hier linke, symmetrisch aufgebaute Oberteil-Hälfte 2.1 mit dem Griff 9.1 und einer ebenfalls bevorzugt vorgesehenen Schneide 14.1.

Damit der Fruchtsaft nicht aus der Pressvorrichtung spritzen kann, ist an den Oberteil-Hälften 2.1 und 2.2 am Außenrand ebenfalls eine entsprechende Überdeckung 8.1 und 8.2 angebracht, wobei wiederum ein Freiraum 3 zur Aufnahme der Fruchtschale ähnlich Fig. 1 gebildet ist. Durch diese Überdeckung 8.1 und 8.2 kann der Fruchtsaft nicht aus der Pressvorrichtung in die Augen spritzen. Um die Frucht noch besser auspressen zu können, sind im Unterteil 1 und in den Oberteil-Hälften 2.1 und 2.2 mit den Druckflächen 7.1 und 7.2 in den Pressraum gerichtete Noppen eingearbeitet. Der so ausgepreßte Fruchtsaft kann dann über die zwei seitlichen Ausgießnasen 12 gesondert oder auch gemeinsam ausgegossen werden.

## Patentansprüche

1. Pressvorrichtung zum Auspressen von in Scheiben geschnittenen Früchten, mit einem schalenförmigen Unterteil (1) zur Aufnahme von Fruchtscheiben, mit einem Oberteil (2) mit einer Druckfläche (7) und mit einer diese verbindenden Achse (4), sowie mit am Ober- und Unterteil angeformten Griffen (6, 9), dadurch gekennzeichnet, daß das Oberteil (2) am Rand seiner Druckfläche (7) eine erhabene Überdeckung (8) aufweist, die über den Rand (5) des Unterteils (1) übersteht, und zwischen dem Rand (5) des Unterteils (1) und der Druckfläche (7) des Oberteils (2) ein Freiraum (3) für die Fruchtschale ausgebildet ist.

2. Pressvorrichtung nach Anspruch 1,
dadurch gekennzeichnet, daß das Oberteil (2) mittig und senkrecht zur Achse (4) in zwei Oberteil-Hälften (2.1, 2.2) geteilt ist.

3. Pressvorrichtung nach Anspruch 2,
dadurch gekennzeichnet, daß jede der Oberteil-Hälften (2.1, 2.2) in der Symmetrieebene der Pressvorrichtung eine Schneide (14.1, 14.2) aufweist.

4. Pressvorrichtung nach Anspruch 3,
dadurch gekennzeichnet, daß im Unterteil (1) eine Vertiefung (15) zur Aufnahme der Schneiden (14.1, 14.2) im zusammengepressten Zustand vorgesehen ist.

5. Pressvorrichtung nach einem der Ansprüche 1 bis 4,
dadurch gekennzeichnet, daß der stirnseitige Ausgießbereich (12) eine konkave Rundung (11) aufweist.

6. Pressvorrichtung nach Anspruch 5,
dadurch gekennzeichnet, daß die konkave Rundung (11) etwa eine Viertelkreisform mit einem Kreisdurchmesser von ca. 60 bis 120 mm aufweist.

7. Pressvorrichtung nach einem der Ansprüche 1 bis 6,
dadurch gekennzeichnet, daß die Druckfläche (7) des Oberteils (2) oder der Oberteile (2.1, 2.2) unterhalb der Achse (4) fortgesetzt und auf der Oberseite zu einer rohrförmigen Lagerung (13) geschlossen ist.
